# EUROPÄISCHE PATENTSCHRIFT

(11) **EP 0 935 788 B1**
(45) Veröffentlichungstag und Bekanntmachung des Hinweises auf die Patenterteilung: **18.08.2004**
(21) Anmeldenummer: 97945838.7
(22) Anmeldetag: 15.10.1997
(51) Int. Cl.: G06K 19/10, G06K 19/14

(54) **IDENTIFIKATIONSKARTE MIT ZUSÄTZLICHEN SICHERHEITSMERKMALEN UND VERFAHREN ZU DEREN HERSTELLUNG**
IDENTITY CARD WITH ADDITIONAL SECURITY FEATURES AND METHOD OF PRODUCING THE SAME
CARTE D'IDENTIFICATION COMPORTANT DES SIGNES DISTINCTIFS SUPPLEMENTAIRES DE SECURITE ET PROCEDE PERMETTANT DE LA PRODUIRE

(30) Priorität: 01.11.1996 DE 19645084
(43) Veröffentlichungstag der Anmeldung: 18.08.1999
(73) Patentinhaber: Austria Card GmbH, 1232 Vienna (AT)
(72) Erfinder: PRANCZ, Markus, A-1200 Wien (AT)
(74) Vertreter: Riebling, Peter, Dr.-Ing.
(86) Internationale Anmeldenummer: PCT/EP1997/005680
(87) Internationale Veröffentlichungsnummer: WO 1998/020452

(56) Entgegenhaltungen:
- EP-A- 0 377 956
- DE-A- 4 425 507
- GB-A- 2 230 638
- GB-A- 2 258 426
- IT-A- FI 930 078
- PATENT ABSTRACTS OF JAPAN vol. 017, no. 608 (E-1457), 9.November 1993 -& JP 05 190281 A (NISSIN ELECTRIC CO LTD), 30.Juli 1993,

## Beschreibung

Die Erfindung betrifft eine Identifikationskarte mit unterschiedlichen Sicherheitsmerkmalen und zusätzlichen Sicherheitsmerkmalen in Form eines oder mehreren grafisch nahezu beliebig gestaltbaren Anzeigefeldern.

Identifikationskarten werden entsprechend den ISO Normen 7810,7811,7813,7816 und ISO/IEC DIS 10536 für die unterschiedlichsten Anwendungen einer Standardisation unterworfen. Zielsetzung all dieser Normen ist die Erhöhung der Sicherheit und der Geschwindigkeit von Identifikations- und Transaktionsvorgängen bei gleichzeitiger Reduktion der integralen Kosten.

Bei einer Vielzahl von Identifikationsvorgängen, wie beispielsweise bei Führerscheinkarten, bei Zutrittsausweiskarten bzw. ganz allgemein bei Berechtigungskarten muß eine rasche Kontrolle und Überprüfung unter oft widrigen Umständen gewährleistet sein, wobei derartige Karten weitgehend fälschungssicher ausgeführt sein müssen.

Identifikationsvorgänge werden oftmals mittels mobiler Kontrollgeräte unter extremen Witterungs- und Sichtbedingungen durchgeführt, und dabei werden Informationen aus den Identifikationskarten ausgelesen, in den Lesegeräten verarbeitet und entsprechend angezeigt.

Die Erkennungskarte in der IT-FI930078 zeigt einen vielschichtigen Aufbau mit den folgenden Schichten von oben nach unten gesehen: Transparente obere Trägerschicht, obere Personifizierungsschicht, isolierende Kodierschicht mit Löchern, obere elektrische Schaltkreis-Schicht mit Anschluss, obere Isolierschicht, Elektrolumineszenz-Schicht, untere Isolierschicht, untere elektrische Schaltkreis-Schicht mit Anschluss, untere Personifizierungsschicht, untere Trägerschicht (ggf. transparent). Die elektrische Kontaktierung der beiden Schaltkreis-Schichten erfolgt über direkten elektrischen Kontakt der Anschlüsse. Das durch die Elektrolumineszenz-Schicht emittierte Licht fällt nur durch die Code-Löcher der Kodierschicht hindurch nach außen, das restliche Licht wird jedoch absorbiert und dringt nicht nach außen.

In der GB-A-2 258 426 ist ein Sicherheitsdokument mit eingebettetem, mehrschichtigem Sicherheitsstreifen gezeigt, welcher Sicherheitsstreifen eine elektro-lumineszierende Schicht aufweist. Der Sicherheitsstreifen kann auch vollflächig auf mehrschichtigen ID-Karten aufgebracht sein, farbiges Licht ausstrahlen und optisch transparent ausgebildet sein.

Die EP-A-0 337 956 offenbart eine induktive Kopplung von elektrischer Energie bei einem elektrischen Anzeigetafel-System mit einer Elektrolumineszenz-Anzeige in Form von Dioden.

Die DE-A-44 25 507 zeigt ein Verfahren zur Herstellung einer mehrschichtigen Struktur für Elektrolumineszenz-Bauteile, welche Struktur mindestens eine Leuchtstoffschicht und mindestens eine dielektrische Schicht auf einem Substrat beinhaltet.

Der vorliegenden Erfindung liegt die Aufgabe zugrunde, eine Identifikationskarte (ID-Karte) der eingangs genannten Art so weiterzubilden, daß sie mit zusätzlichen Sicherheitsmerkmalen fälschungssicherer ausgebildet ist.

Die erfindungsgemässe Neuheit liegt nun darin, daß die optische Anzeige eines Identifikationsvorganges nicht mehr im Erfassungsgerät erfolgen muß, sondern auf der ID-Karte selbst durch Anzeigefelder angezeigt wird, die durch den Identifikationsvorgang entsprechend aktiviert werden. Die Anzeigefelder sind mindestens teilweise als Elektrolumineszenz-Leuchtflächen ausgebildet. Eine derartige ID-Karte ist wesentlich schwieriger zu fälschen bzw. es bedarf eines wesentlich höheren Aufwandes, derartige Karten nachzubauen.

Es sind demnach als zusätzliches Sicherheitsmerkmal der Identifikationskarte ein oder mehrere Leuchtflächen auf der Karte angebracht, wobei in einem ersten Ausführungsbeispiel der Erfindung die Aktivierung und Stromversorgung für diese Leuchtflächen dadurch erfolgt, daß die Karte in einem entsprechenden Kartenleser eingesteckt wird und dort eine entsprechende Stromübertragung auf die Karte in direkter Kontaktierung oder in induktiver oder kapazitiver Weise erfolgt.

In einer zweiten Ausführungsform der vorliegenden Erfindung ist vorgesehen, daß die Stromversorgung der Karte induktiv durch äußere elektromagnetische Felder erfolgt, wobei die Karte notwendigerweise nicht in ein Lesegerät eingesteckt werden muss, sondern nur dem entsprechenden elektromagnetischen Feld ausgesetzt werden muss, durch welches dann induktiv die entsprechende Stromversorgung für die Karte erfolgt.

Allen beiden Ausführungsbeispielen ist gemeinsam, daß die Karte mit dem zusätzlichen Sicherheitsmerkmal der Anbringung von ein oder mehreren Leuchtflächen eine zusätzliche Sicherheit gegen Fälschung hat.

Es ist bekannt, Kreditkarten und ID-Karten mit sogenannten Hologrammen auszurüsten, was aber mit dem Nachteil verbunden ist, daß ein derartiges Hologramm grob durch Kopieren gefälscht werden kann und nur bei genauer Betrachtung als Fälschung identifiziert werden kann. Weiterer Nachteil des bekannten Hologramms ist, daß dieses stets nur an der Oberfläche der Kartendeckschicht angebracht wird und deshalb leicht entfernt werden kann.

Hingegen sieht die vorliegende Erfindung vor, daß die erfindungsgemäße Leuchtfläche im Inneren der Karte angebracht wird, und zwar zwischen der sogenannten Kernfolie und der darüberliegenden transparenten oder halbtransparenten Deckfolie.

Eine Zerstörung dieses Leuchtfeldes würde eine Zerstörung der Karte selbst voraussetzen, so daß eine gute Fälschungssicherheit gegeben ist.
Aus diesen Gründen ist die erfindungsgemäße Leuchtfläche fälschungssicherer als beispielsweise das vorher genannte Hologramm.

Mit der vorliegenden Erfindung wird eine Identifikationskarte mit langer Lebensdauer geschaffen, wobei als zusätzliches. Sicherheitsmerkmal Leuchtfelder vorhanden sind, die eine hohe Leuchtkraft erbringen. Ein derartiges Leuchtfeld kann z.B. auch mit einer entsprechenden Grafik verziert werden, z.B. einem Landeswappen, einem Schriftzug oder dergleichen mehr.

Es können auch mehrere Leuchtfelder auf der Vorderseite und/oder der Rückseite der Identifikationskarte angeordnet werden. Der Einfachheit halber wird in der folgenden Beschreibung davon ausgegangen, daß ein einziges Leuchtfeld vorhanden ist, obwohl die Erfindung nicht darauf beschränkt ist.

Wird nun eine derartige Identifikationskarte in einen Kartenleser eingesteckt, dann erfolgt in einer bevorzugten Ausführungsform die Kontaktierung der Stromanschlüsse des Leuchtfeldes mit den zugeordneten Kontakten im Kartenleser und diese Stromversorgung bringt nun das Leuchtfeld auf der Identifikationskarte zum Aufleuchten.

Man kann also durch einfaches Einstecken dieser Identifikationskarte in einen Kartenleser erkennen, ob das Leuchtfeld aktiv ist oder ob es nur durch Aufdruck nachgeahmt wurde. Das Leuchtfeld kann dann beispielsweise in der Farbe grün aufleuchten.

Selbstverständlich ist es möglich, mehrere Leuchtfelder in verschiedenen Farben anzubringen, wobei z.B. das eine Leuchtfeld rot aufleuchtet, während das andere Leuchtfeld grün aufleuchtet. Hier kann eine entsprechende Kontaktierung im Kartenleser hergestellt werden, wobei die Kontaktierung so durchgeführt wird, daß beispielsweise dann nur das rote oder grüne Leuchtfeld - entsprechend der Kartenkonfiguration - zum Aufleuchten gebracht wird, wenn die Karte in den Kartenleser gesteckt wird.

In der vorliegenden Erfindung ist es vorgesehen, daß auf der Identifikationskarte noch weitere Anordnungen zur Erhöhung der Fälschungssicherheit und/oder zur Identifizierung der Karte und/oder des Trägers enthalten sind. Hierbei ist in der Karte noch ein Chipmodul implantiert, welches ebenfalls beim Einstecken in den Kartenleser ausgelesen werden kann. Es können dann die ausgelesenen Daten mit entsprechenden Daten einer Datenbank verglichen werden und entsprechen dem Abgleich dieser Daten können dann ein oder mehrere Leuchtfelder auf der Karte zum Aufleuchten gebracht werden, um anzuzeigen, daß der Karteninhaber befugtermaßen durch eine Zugangskontrolle oder durch eine andere Sperre passiert.

Die beschriebenen Elektrolumineszenz-Anzeigen benötigen eine entsprechende Spannungsversorgung, die bevorzugt im Bereich von 100 Volt und 400 Hz liegt. Eine derartige Versorgungsspannung kann sehr leicht aus einer Batteriespannung und einem zugeordneten Spannungskonverter abgeleitet werden.

Eine derartige Spannungsversorgung kann in einem Kartenleser angeordnet werden; die Spannungsversorgung kann aber auch induktiv durch ein entsprechendes elektromagnetisches Feld erfolgen, wobei auf der Identifikationskarte eine entsprechende Induktionsspule angebracht ist. Die Induktionsspule kann hierbei direkt auf der Karte aufgedruckt sein oder sie kann durch diskrete Kupferwicklungen auf der Karte implantiert werden.

Ebenso ist es möglich, die Spannungsversorgung zu dem Elektrolumineszenz-Modul zu multiplexen, und eine gepulste Stromversorgung durchzuführen, um so den Versorgungsstrom zu minimieren. Ebenso können durch eine langsam pulsierende Anzeige noch zusätzliche Sicherheitsmerkmale erfüllt werden, z.B. können verschiedenen Sicherheitsstufen bestimmte Pulsfrequenzen zugeordnet werden.

Von Vorteil hierbei ist, daß die Leuchtfelder mittels bekannter Druckverfahren und bekannter Laminierprozesse hergestellt werden können und damit eine einfache Integration des zusätzlichen Fälschungssicherheitsmerkmals in vorhandene Fertigungsprozesse möglich ist.

Der vorliegenden Erfindung liegt nun die Erkenntnis zugrunde, daß für die Herstellung der Leuchtflächen Siebdruckpasten, die mittels in der Kreditkartenindustrie Zylindersiebdruckautomaten, aufgebracht werden, hervorragend geeignet sind, wobei als Basisleitschicht übliche Silber-, Karbon-, Kupfer- oder auch Mischungen aus diesen bekannten Leitpasten zum Einsatz kommen. Durch diesen ersten Siebdruckprozess kann nicht nur die Basiselektrode für das Leuchtfeld hergestellt werden, sondern im gleichen Druckvorgang können auch die Anschlußleitungen für die transparente und leitende Oberflächenelektrode mitbedruckt werden. Alle weiteren Schichten werden bevorzugt mittels Zylindersiebdruckprozesse ausgeführt. Zunächst werden z.B. zwei Isolationsschicht-Drucke über die Basiselektrode gedruckt und anschließend die sogenannte Leuchtschicht, z.B. in Form einer Phosphorpaste. Darüber wird eine transparente und leitende Oberflächenelektrode angeordnet, die bevorzugt aus Indium-Zinn-Oxid-Pasten besteht, und die wiederum zur Reduktion des Flächenwiderstandes an den Randbereichen über die Leitpasten-Bahnen gedruckt werden. Anschließend können noch entsprechend dem gewünschten Design grafische Drucke mit deckenden Farben und/oder transluzenten Farben ausgeführt werden.

In einer weiteren typischen Ausführungsform wird nicht nur ein Leuchtfeld mit entsprechender Kondensatoranordnung und zwei elektrischen Anschlüssen ausgeführt, sondern z.B. mehrere Felder, beispielsweise zwei mit rot und grün leuchtenden Feldern bzw. Schriften und/oder Symbolen. Damit kann eine rasche visuelle Ja-Nein-Entscheidung visualisiert werden.

In einer Weiterbildung der Ausführungsform können mehrere Felder mit unterschiedlichen Farben und mit unterschiedlichem grafischem Erscheinungsbild ausgeführt und entsprechend der ID-Karten-Speicher- und Auslese-Information angesteuert werden, wobei jeweils die Basisleitpastenschicht und deren elektrischer Anschluß für alle Leuchtfelder identisch sein kann.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch eine Ausführung eines Elektroluminszenz-Feldes nach der Erfindung,
- Figur 2:: eine Draufsicht auf die unterste Leitschicht des Kartenträger,
- Figur 3:: eine Draufsicht auf die erste Isolationsschicht,
- Figur 4:: eine Draufsicht auf die zweite Isolationsschicht,
- Figur 5:: eine Draufsicht auf die Lumineszenz-Schicht,
- Figur 6:: eine Draufsicht auf die transparent und elektrisch leitend ausgebildete Deckschicht.

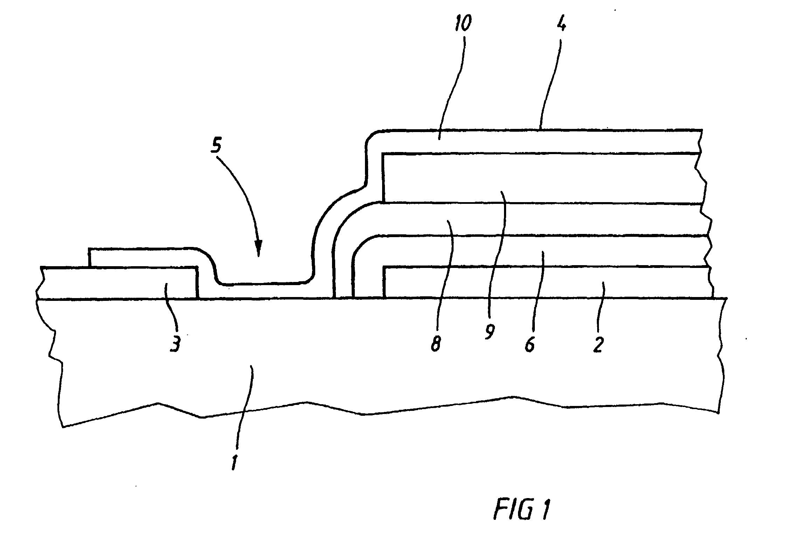

In Figur 1 sind auf einem Kartenträger 1, der bevorzugt aus einem laminierten Kunststoffmaterial besteht, Leitschichten 2 und 3 aufgebracht, die bevorzugt entsprechend der vorstehenden Beschreibung aus einer Ag-Paste mit einer Stärke von beispielsweise 10 bis 20 Mikrometer (µm) besteht.

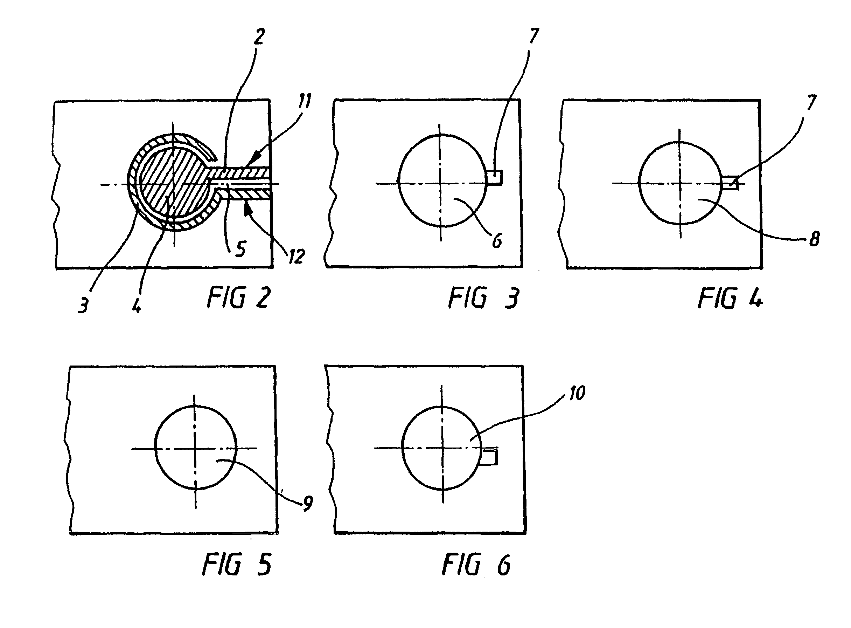

Die Leitschichten 2 und 3 aus Ag-Paste nehmen eine Formgebung gemäss Figur 2 ein, wobei eine mittlere Leitschicht 2 z.B. in Form einer Keule vorhanden ist, durch welche ein inneres, etwa rund ausgebildetes Leuchtfeld 4 definiert wird, von welchem eine Anschlußbahn 11 abgeht.

Um dieses mittlere Leuchtfeld 4 erstreckt sich die weitere Leitschicht 3, die ebenfalls aus der Ag-Paste in dem vorgestellten Dickenbereich besteht, wobei diese Leitschicht 3 das Leuchtfeld 4 etwa kreisförmig umgibt und ebenfalls durch eine Anschlußbahn 12 nach aussen hin verlängert ist. Die beiden Leitschichten 2, 3 sowie die Anschlußahnen 11 und 12 sind durch einen dazwischenliegenden Isolationspfad 5 voneinander getrennt. Die Anschlußbahnen 11, 12 dienen zur Kontaktierung des Leuchtfeldes 4 mit einer nicht dargestellten Spannungsquelle.

In einer anderen Ausgestaltung können diese Leiterbahnen 11, 12 der Leitschichten 2, 3 entfallen und statt dessen könnte die Kontaktierung im Bereich der elektrisch leitenden Deckschicht 10 erfolgen.

Es wird noch angemerkt, daß die im Beispiel gewählte runde Ausbildung des Leuchtfeldes 4 rein willkürlich ist; es ist nahezu jede beliebige Formgebung des Leuchtfeldes möglich. Es muss dann natürlich auch die das Leuchtfeld 4 umgebende Leitschicht 3 in ihrer Formgebung angepasst werden, damit über den gesamten Anzeigebereich zwischen dem Leuchtfeld 4 und der dieses umgebenden Leitschicht 3 der Isolationspfad 5 abstandshaltend verbleibt.

In Figur 3 ist dargestellt, daß in einem nächsten Schritt auf die Leitschicht 2 eine Isolationsschicht 6 aufgebracht wird, die bevorzugt eine Dicke von etwa 12 bis 15 µm aufweist und aus einem elektrisch isolierenden Kunststoffmaterial besteht.

Auf diese erste Isolationsschicht 6 kann in einem weiteren Schritt eine zweite Isolationsschicht 8 aufgebracht werden, deren Dicke etwa der Dicke der ersten Isolationsschicht 6 entspricht. Die zweite Isolationsschicht 8 dient zur vollständigen Abdeckung der ersten Isolationsschicht 6 , sofern in dieser Fehlstellen vorhanden sein sollten.

In den Figuren 3 und 4 ist im übrigen noch gezeigt, daß die beiden Isolationsschichten 6 und 8 eine Art Fortsatz 7 haben, welcher ebenfalls isolierend wirkt und einen Kurzschluß zwischen den Leitschichten 2, 3 im Bereich der Anschlußbahnen 11, 12 verhindern soll.

In einem nächsten Schritt gemäß Figur 5 werden die beiden Isolationsschichten 6 und 8 nun von einer Lumineszenz-Schicht 9 abgedeckt, die bevorzugt aus einer Phosphor-Paste besteht, die in einer Dicke von etwa 20 bis 40 µm aufgetragen wird.
Die Ausdehnung der Phosphor-Paste definiert letztendlich die Geometrie des Leuchtfeldes 4.

Gemäß Figur 6 wird die Lumineszenz-Schicht 9 schließlich nach oben durch eine sogenannte transparente und elektrisch leitfähige Deckschicht 10 abgedeckt. Diese Deckschicht besteht aus einer sogenannten ITO-Paste (Indium-Tin-Oxid-Paste) in einer Dicke von etwa 5 bis 25 µm. Die Deckschicht 10 wirkt als Gegenelektrode zur Leitschicht 2 und erstreckt sich im Beispiel über den Isolationsbereich 5 bis hin zur Leitschicht 3, welche die Kontaktierung der Deckschicht 10 übernimmt.

Insgesamt beträgt dann die Gesamtdicke des Leuchtfeldes 4 zwischen 59 Mikrometer und 115 Mikrometer. Bevorzugt wird allerdings eine Dicke von etwa 80 µm.

Aufgrund dieser Dickenangaben ist es gewährleistet, daß das Leuchtfeld 4 nicht über die Oberfläche einer herkömmlichen Identifikationskarte hinausragt und somit sämtliche weltweit gültigen Normen erfüllt werden. Auf die Deckschicht 10 kann nun in ansich bekannter Weise eine transluzente Deckfolie auflaminiert werden, die beispielsweise grafische Elemente, wie Wappen, Anzeigen oder dergleichen enthält, die dann durch das Leuchtfeld 4 zum Aufleuchten gebracht werden.

Das so hergestellte Vorprodukt wird nun mit entsprechenden Deckfolien und Basisfolien in einer Mehretagenpresse fertig laminiert, so daß eine Identifikationskarte, Kreditkarte oder Personalausweiskarte bekannter Ausführung entsteht.
Wichtig ist, daß das genannte Leuchtfeld vollständig zwischen den genannten Deckschichten der Karte integriert ist, so daß diese Karte fälschungssicher wird, weil eine Zerstörung oder ein versuchter Austausch des Leuchtfeldes die gesamte Karte zerstören würde.

### Zeichnungslegende

- 1: Kartenträger
- 2: Leitschicht
- 3: Leitschicht
- 4: Leuchtfeld
- 5: Isolationspfad
- 6: Isolationsschicht
- 7: Fortsatz
- 8: Isolationsschicht
- 9: Lumineszenzschicht
- 10: Deckschicht (transparent, elektrisch leitend)
- 11: Anschlußbahn
- 12: Anschlußbahn

## Patentansprüche

1. Identifikationskarte mit im elektrischen Feld zur Elektrolumineszenz anregbaren Sicherheitsmerkmalen, welche in gewünschter Form und Größe in Form von mindestens einem Leuchtfeld (4) in die Identifikationskarte integriert werden, welche Identifikationskarte folgende Schichten beinhaltet:
ein Karten-Trägermaterial (1),
eine erste elektrisch leitende Schicht (2) auf dem Karten-Trägermaterial (1),
mindestens eine Isolationsschicht (6; 8) auf der ersten elektrisch leitenden Schicht (2),
eine Elektrolumineszenz-Schicht (9), welche das Leuchtfeld (4) definiert, auf der mindestens einen Isolationsschicht (6; 8), und
eine zweite elektrisch leitende Schicht in Form einer mindestens teilweise transparenten Deckschicht (10) auf der Elektrolumineszenz-Schicht (9),
**dadurch gekennzeichnet, daß**
die Identifikationskarte ein Chip-Modul umfaßt, welches Identifikationsdaten enthält und eine externe Kommunikation der Karte übernimmt und das Leuchtfeld (4) entsprechend ansteuert.

2. Identifikationskarte nach Anspruch 1, **dadurch gekennzeichnet, daß** die Stromversorgung des Leuchtfeldes (4) durch kapazitive oder induktive Kopplung oder direkten elektrischen Kontakt erfolgt.

3. Identifikationskarte nach einem der Ansprüche 1 oder 2, **dadurch gekennzeichnet, daß** das Leuchtfeld (4) farbig ist.

4. Identifikationskarte nach einem der Ansprüche 1 bis 3, **dadurch gekennzeichnet, daß** mehrere Leuchtfelder (4) auf der Identifikationskarte vorgesehen sind.

5. Identifikationskarte nach einem der Ansprüche 1 bis 4, **dadurch gekennzeichnet, daß** die elektrisch leitende Deckschicht (10) im wesentlichen aus Indium-Tin-Oxid besteht.

## Claims

1. Identity card with security features excitable to electroluminescence in an electrical field which are integrated into the identity card in the desired shape and size in the form of at least one light display (4), which identity card contains the following layers:
a card substrate material (1),
a first electrically conductive layer (2) on the card substrate material (1),
at least one insulation layer (6; 8) on the first electrically conductive layer (2),
an electroluminescent layer (9) which defines the light display (4) on the at least one insulation layer (6; 8), and
a second electrically conductive layer in the form of an at least partly transparent top layer (10) on the electroluminescent layer (9),
**characterized in that**
the identity card comprises a chip module which contains identification data and serves as a means of external communication for the card and triggers the light display (4) accordingly.

2. Identity card according to Claim 1, **characterized in that** the light display (4) is powered by capacitive or inductive coupling or by direct electrical contact.

3. Identity card according to Claim 1 or Claim 2, **characterized in that** the light display (4) is coloured.

4. Identity card according to any one of Claims 1 to 3, **characterized in that** a plurality of light displays (4) are provided on the identity card.

5. Identity card according to any one of Claims 1 to 4, **characterized in that** the electrically conductive top layer (10) essentially consists of indium-tin-oxide.

## Revendications

1. Carte d'identification comportant des signes distinctifs de sécurité qui sont aptes à être excités pour devenir électroluminescents dans le champ électrique et qui sont intégrés avec la forme et la taille voulues, sous la forme d'au moins un champ lumineux (4), dans la carte d'identification, laquelle contient les couches suivantes :
- un matériau de substrat de carte (1),
- une première couche conductrice d'électricité (2) sur le matériau de substrat de carte (1),
- au moins une couche isolante (6 ; 8) sur la première couche conductrice d'électricité (2),
- une couche électroluminescente (9) qui définit le champ lumineux (4), sur la ou les couches isolantes (6 ; 8), et
- une seconde couche conductrice d'électricité en forme de couche de recouvrement (10) au moins partiellement transparente sur la couche électroluminescente (9),
**caractérisée en ce qu'**elle comprend un module à puce qui contient des données d'identification, qui assure une communication externe de la carte et qui commande en conséquence le champ lumineux (4).

2. Carte d'identification selon la revendication 1, **caractérisée en ce que** l'alimentation électrique du champ lumineux (4) se fait par couplage capacitif ou inductif ou par contact électrique direct.

3. Carte d'identification selon la revendication 1 ou 2, **caractérisée en ce que** le champ lumineux (4) est coloré.

4. Carte d'identification selon l'une des revendications 1 à 3, **caractérisée en ce que** plusieurs champs lumineux (4) sont prévus sur la carte d'identification.

5. Carte d'identification selon l'une des revendications 1 à 4, **caractérisée en ce que** la couche de recouvrement conductrice d'électricité (10) se compose essentiellement d'oxyde d'étain dopé à l'indium.
